Europäisches Patentamt

European Patent Office

Office européen des brevets

(11) Publication number: **0 241 040**
**A1**

## (12) EUROPEAN PATENT APPLICATION

(21) Application number: **87105320.3**

(22) Date of filing: **10.04.87**

(51) Int. Cl.³: **B 29 C 49/02**

(30) Priority: **11.04.86 US 850323**

(43) Date of publication of application:
**14.10.87 Bulletin 87/42**

(84) Designated Contracting States:
**AT BE CH DE ES FR GB IT LI NL SE**

(71) Applicant: **Occidental Chemical Corporation**
**360 Rainbow Boulevard South ,Box 728**
**Niagara Falls, N.Y. 14302(US)**

(72) Inventor: **Henneberry, Gary S.**
**Rd. 2 Box 2170**
**Mt. Holly New Jersey(US)**

(72) Inventor: **Bryant, Richard L.**
**1620 - 45th Street**
**Pennsauken, New Jersey(US)**

(74) Representative: **Huber, Bernhard, Dipl.-Chem. et al,**
**Patentanwälte H. Weickmann, Dr. K. Fincke F.A.**
**Weickmann, B. Huber Dr. H. Liska, Dr. J. Prechtel**
**Möhlstrasse 22 Postfach 860 820**
**D-8000 München 86(DE)**

(54) **Manufacture of plastic bottles.**

(57) Processes and apparatus are provided for the manufacture of plastic hollow parts, for example, plastic containers and more particularly, plastic bottles. Extrusion and injection molding processes are described for the blow molding of plastic preforms for use in stretch-blow molding of plastic products. Processes and apparatus are described for producing PVC preforms by injection molding for use in stretch-blow molding of PVC hollow parts including containers and bottles. The injection molding step is conducted in a mold (38) having a gate (36) which reduces shear rate on the molten PVC. Such gates are non-circular and can be annular, slotted, cross-shaped or oval in shape. Improved performance is obtained from preforms which are cooled under controlled conditions, such as by contacting the inside and/or the outside of the preform with a cooling medium. The preforms produced by the processes and apparatus of the invention are readily useful in the reheat and blow (RHB) stretch- blow molding process.

*FIG. 1*

CASE 4957/JFM
April 9, 1986

## MANUFACTURE OF PLASTIC BOTTLES

### Background of the Invention
### and Information Disclosure Statement

This invention relates to the manufacture of plastic hollow parts, for example, plastic containers and more particularly, plastic bottles.

Plastic bottles are rapidly replacing bottles made of glass and other materials. One of the important materials used in the manufacture of plastic bottles is polyvinyl chloride (PVC). Wherever used in this specification or claims, the term "polyvinyl chloride" or "PVC" is intended to include the homopolymer or a copolymer of vinyl chloride with an ethylenically unsaturated monomer, such as vinyl acetate. The PVC resin is generally blended with additives such as impact modifiers, stabilizers and the like to form PVC compound.

PVC bottles have been made by a blow molding process wherein molten PVC compound is extruded from a die in the form of a molten hollow tube or parison. An open mold in the form of the desired bottle is closed around the molten PVC tube, and the bottom of the tube is pinched together by the mold. Air under pressure is fed through a blow pin into the PVC tube which expands to fill the mold, and the part is cooled while it is held under internal air pressure. Thereafter, the mold is opened, and the blow molded bottle is ejected. Such a process is disclosed in the Kirk Othmer Encyclopedia of Chemical Technology, 3rd Edition, pages 198 and 199 (1982).

In a later development, PVC bottles are subjected to stretching across the width and length of the bottle to biaxially orient the PVC. This process is disclosed in the September 1976 issue of Modern Plastics, pages 82, 85 and 86, and in a paper entitled "Orientation Blowmolding of PVC" by J. J. Cannaday of the Ethyl Corporation, Technical Center. Four steps are involved in the process. First, a molten PVC parison is extruded and is clamped by a preform mold and is transferred to a calibration-blowing-cooling station. The neck finish is formed and the parison is blown to the preform shape. The preform is cooled to the orientation temperature by controlled temperature water or oil or other liquid circulating through the preform mold. When the preform has been conditioned to the orientation temperature, the dual clamps open and shift, placing the preform molds around the extruding parison. The clamp shift also positions the blow molds around the preforms. The blown preform is removed from the blow pin and transferred to a stretch-blow station. The conditioned preform is stretched to the bottom of the mold by an internal stretch rod and then blown to the shape of the blow mold. At the end of the cycle platens shift to the parison and preform stations. Simultaneously the unloading device removes the finished containers from the orientation station blow pins, and places them upright on the take-off conveyor. This equipment and process have many limitations. First, the overall cycle time is controlled by the slowest step in the cycle which is usually the extrusion or conditioning steps. Moreover, it is generally necessary to dedicate a given machine to the manufacture of one bottle because changeover costs are excessive.

Plastic bottles have also been made of polypropylene. Bottles made on the BiAxomat machine begin with a parison fabricated on conventional pipe-extrusion equipment, cooled, and cut to length. The parisons are fed to an oven conveyor. They are reheated to the orientation temperature in a controlled convection heating oven. The reheated parisons are picked from the oven conveyor by a mechanism that places them onto a blow plug. The thread dies close, and a swage assembly compression molds the threads and forms the neck finish. The picking mechanism, still holding the parisons, simultaneously moves upward, orienting the parisons longitudinally. The maximum stretching capacity of the picking mechanism is three times the parison's original length. By setting the stop position on the machine at any point within this range, a precise degree of longitudinal orientation can be achieved. As the molds close on the stretched parison, pinch-off blades seal the upper end of the parison and sever the tail, which is returned automatically to a scrap-handling system for recycling. In the final step of the operation, the bottle is finish blow molded, with expansion to the mold surface imparting necessary radial orientation. Compression molding of the neck achieves consistent neck finish without reaming or other costly secondary operations.

Plastic bottles are being commonly made from PET (polyethylene terephthalate). Early versions of PET bottles were made in one-stage equipment and process wherein the molten PET is injection molded, then transferred to a temperature conditioning station, and then stretch blown into the final bottle shape. This process is disclosed in Modern Plastics Encyclopedia at page 186 (1985-1986). This equipment, which is manufactured by the Neissi firm, has been used for PVC bottles, but not very successfuly. High cost PVC compounds are required. Also, the machine creates high localized shear rates in the polymer mass which degrades the PVC.

The foregoing process and equipment is being replaced in the PET bottle industry by a two-stage equipment and process, commonly known as the RHB method, which means reheat and blow method. In accordance with this process, a PET preform is produced by injection of molten PET into a mold that forms a preform that is shaped somewhat like a test tube. The preforms are normally cooled to room temperature and can be stored and shipped in this form, for example, to another plant where the PET bottles can be blown. In the second step, the PET preforms are reheated and blown into molds that are the shape of the final bottle. In this process the conditioned preform is stretched to the bottom of the mold and the bottle is blown with air to the final form. Both steps can be done simultaneously. This process is known as stretch blow molding or orientation blow molding, and is disclosed in Modern Plastics Encyclopedia, pages 186 and 188 (1985-1986). When PVC is used in this latter process and equipment, various difficulties have arisen. For example, the PVC preforms cannot be successfully blown into bottles having a diameter significantly larger than the diameter of the neck of the bottle.

It is further found that when preforms are injection molded with standard equipment having a circular gate on the mold, the PVC degrades, which results in discoloration in the bottles.

Commercial systems utilizing the foregoing methods are described in Modern Plastics, April 1977, pages 70 to 72.

It is an object of the present invention to overcome the above-listed disadvantages so that clear, strong, high quality bottles can be readily produced from PVC.

### Summary of the Invention

These and other objects of the invention are realized by processes and apparatus for producing a plastic preform for use in blowing plastic hollow parts, such as plastic containers, more particularly plastic bottles.

One process of the invention comprises forming a plastic preform and blowing the preform to expand the preform to a size smaller than the desired plastic container. This initial blowing of the preform to form an expanded preform enables the two-step RHB process to be utilized for the production of PVC bottles having a larger body diameter versus neck diameter than is possible with standard extrusion or injection molding. The initial preform may be produced by extrusion or injection blow molding.

In another aspect of the invention, PVC preforms have been made successfully by injection molding. The mold for the injection molding of PVC is provided with a gate which reduces shear rate on the molten PVC. Such a gate can be annular, slotted, cross-shaped or oval in shape to reduce the shear rate on the molten polymer mass. The process and apparatus are useful in the production of containers from other plastics than PVC, such as disclosed hereinafter.

Another aspect of the invention is the resolution of the problem when producing bottles from thick wall preforms. The compound in the heated preform was found to anneal during the air cooling process so that the resultant preform could not be successfully reheated and stretch blown in the second stage. The annealing problem which makes it difficult to expand preforms to full bottle size, is eliminated by cooling the preforms under controlled conditions. The cooling step can be accomplished by contacting the inside and/or the outside of the preform with a cooling medium. The preform can be immersed in a cooling medium such as water or other liquid. The inside and/or outside of the preform can be contacted with (a) a liquid such as water, alcohol or mixtures thereof, (b) a liquified gas which evaporates, (c) a gas, such as air, or (d) a combination thereof, such as a mixture of water and alcohol that is sprayed with an air stream.

## Description of Preferred Embodiments of the Invention

The processes and apparatus of this invention are particularly useful with PVC homopolymers and copolymers. The processes and apparatus are useful with other thermoplastics such as polypropylene, acrylonitrile polymers, such as ABS and acrylonitrile-butadiene polymers, and polymer alloys, such as alloys of PVC with other polymers, such as polyvinylidene chloride. The processes and apparatus involving injection molding are useful with crystalline polymers such as polyethylene terephthalate (PET).

## Manufacture of Preforms By Blow Molding

In the bottle blowing art, the ratio of bottle diameter to neck diameter is referred to as the hoop blow-up ratio. It has been found that PVC bottles requiring a high hoop blow-up ratio cannot be produced by the conventional reheat and blow (RHB) molding process. PVC bottles with lower hoop blow-up ratios are readily produced. The problem has been solved in accordance with the present invention by producing the preforms by a blow molding process. The preform blow molding process can be accomplished by producing an initial preform by extrusion or injection molding, and thereafter introducing the initial preform into an expanded preform mold having a diameter greater than the neck diameter but less than the diameter of the desired plastic bottle or container. This step is followed by a gas blowing step in which the preform completely fills out the expanded mold. This process permits the manufacture of a larger body diameter versus neck diameter preform as compared to the standard injection molding process.

The preform blow molding processes of the invention are especially useful for producing PVC preforms at hoop blow-up ratios above about 2.5 to 1 to 3.5 to 1.

The injection molding and extrusion molding processes to produce preforms are carried out at temperatures of about 177 to about 232°C.

The preforms produced by injection or extrusion blow molding are cooled to ambient temperature (usually about 30°C). In any event the preforms are cooled below the glass transition temperature of the plastic, before being reheated and blown in the second step of the RHB process.

### Production of PVC Preforms By Injection Molding

When it is attempted to produce PVC preforms by injection molding of the molten resin into a standard injection mold with the conventional circular gate, it is found that the localized shear rate at the gate is sufficient to degrade the PVC compound.

To overcome the foregoing problem, it has been found that the shear rate can be reduced by increasing the area of the gate and using a non-circular gate. Merely increasing the area of the circular gate allows the molten plastic to drool. It is found that the conventional circular gate can be replaced by a gate having a variety of shapes, which include gates that are annular or tubular in shape; slotted, also known as fangate; cross-shaped which are four-way slotted gates, and oval or elliptical gates. Gates having intricate shapes can be produced by the "wire electro deposition" machining process. The described gates are preferably used in the injection molding process or in the injection blow molding process of the invention to make plastic preforms.

All of the molds and gates and parts thereof disclosed in this specification can be constructed of stainless steel or steels that are coated or plated to protect against corrosion. The molds used in blow molding processes can be constructed of stainless steel and coated and plated steels, as well as, aluminum, aluminum alloys, zinc alloys or beryllium-copper alloys.

The injection molding of preforms is carried out at temperatures in the range of about 177 to about 232°F. The preforms are cooled to ambient temperature (usually about 30°C). In any event the preforms are cooled below the glass transition temperature of the plastic.

<div align="center">Process For Cooling Molded Preforms</div>

It has been found that when thick-walled PVC preforms are used in the stretch blow molding process for manufacturing PVC _bottles and containers, if the preform is allowed to cool in the mold or is ejected from the mold and air cooled, the resulting preform will not expand peripherally during the reheat and blow portion of the stretch blow molding process. While not desiring to be bound by theory, the preform behaves as though an outer layer or "skin" is formed on the surface of the preform. If the thick-walled preform is allowed to cool down too slowly, the heat in the the PVC inside the preform walls reheats the outer surface of the preform above the glass transition temperature of the polymer, and eliminates the effectiveness of the "skin" or film on the outer surface.

In accordance with this invention, the foregoing problems are eliminated by controlled cooling of the preform after it is molded in the extrusion blow molding and injection blow molding processes. The cooling step is accomplished by contacting the inside and/or the outside of the preform with a cooling medium. Methods by which the preform can be cooled is illustrated by the following:

(1) immersing the preform in a cooling medium, such as water or other liquid,

(2) contacting the inside and/or the outside of the preform with a liquid such as water, alcohol or mixtures thereof,

(3) contacting the inside and/or the outside of the preform with a liquefied gas such as $CO_2$ or nitrogen, which evaporates to cool the preform,

(4) contacting the inside and/or the outside of the preform with a cool gas such as air, $CO_2$ and the like,

(5) contacting the inside and/or the outside of the preform with a combination of the foregoing media such as by air blowing a mixture of water and alcohol, and

(6) contacting the preform with a cool metal surface, which can be accomplished, for example, in moving the preform to another "station" in the molding sequence. Thus, the hot preform can be placed in a cool metal cup.

## Brief Description of the Drawings

Figure 1 is a cross-sectional, partly schematic view of an apparatus known in the art. The apparatus shown is a portion of an injection molding machine. As shown in Figure 1, the injection molding machine is connected to an injection preform mold.

Figure 2 is a cross-sectional, partly schematic view of an apparatus of the present invention. The apparatus shown is a portion of an injection molding machine. Figure 2 shows the injection molding machine connected to an injection preform mold of the invention.

Figures 3, 5, 7 and 9 are cross-sectional views of plastic molded preforms.

Figures 4, 6, 8 and 10 are cross-sectional views of molds that are used to mold the plastic preforms shown in Figures 3, 5, 7 and 9, respectively.

Figures 11 to 16 are views of mold gates that can be used in preform molds.

Figures 17 to 20 depict the steps and apparatus involved in the extrusion blow-molding of a plastic preform.

Figures 21 to 24 depict the steps and apparatus in the injection blow-molding of a plastic preform.

## Detailed Description of the Drawings

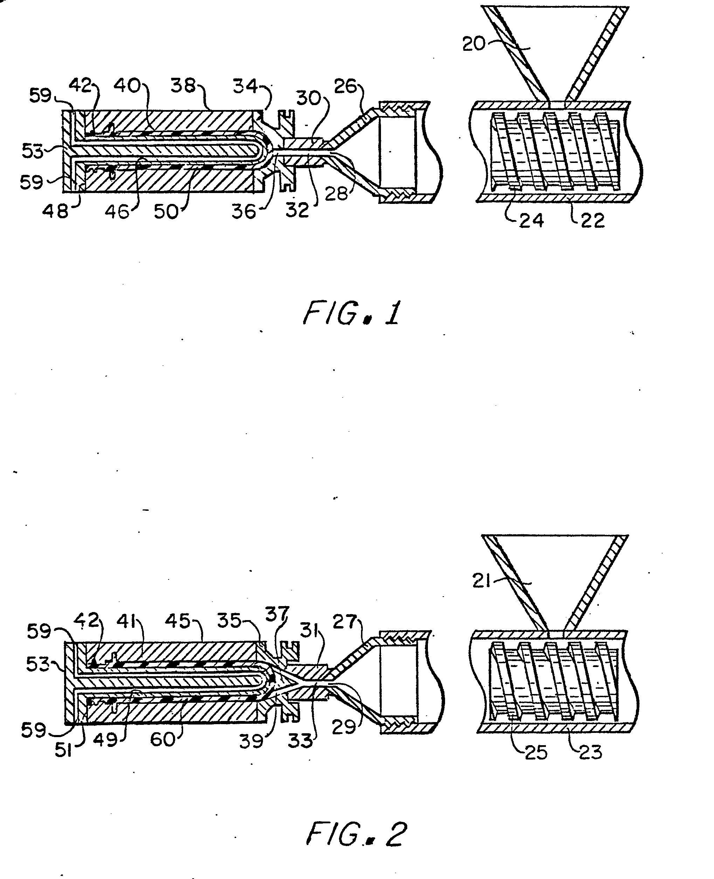

In Figure 1, PVC compound is fed into feed hopper 20 and then into a plasticating zone formed by heated injection barrel 22 and by the mechanical working of screw 24. An amount of semi-molten PVC is fed by screw 24 through nozzle member 26 and orifice 28 into nozzle 30. The screw 24 can act as a ram, or can be stationary with respect to the nozzle member 26. The molten PVC passes through nozzle 30 via orifice 32 and continues through end cap 34 via circular gate area orifice 36 into the mold cavity 40 which is defined by the mold body 38 and core rod 46. A hollow preform 50 is produced in the mold cavity 40 which has a threaded zone 42 for the purpose of providing the threads on the molded preform. The core rod 46 is attached to the backing plate 53 which accepts a cooling medium via conduit 59. The molded preform 50 is ejected from mold cavity 40 by opening the mold at parting line 48 and stripping the preform 50 from the core rod 46.

In Figure 2, PVC compound is fed into feed hopper 21 and then into a plasticating zone formed by heated injection barrel 23 and by the mechanical working of screw 25. An amount of semi-molten PVC is fed by screw 25 through nozzle member 27 and orifice 29 into nozzle 31. The screw 25 can act as a ram or can be stationary with respect to the nozzle member 27. The molten PVC passes through nozzle 31 via orifice 33 and continues through end cap 35 via gate area orifices 39 into the mold cavity 41 which is defined by mold body 45 and core rod 49. The core rod 49 is closed at the opposite end of the mold around which molten PVC is injected. The core rod 49 is attached to the backing plate 53 which accepts a cooling medium through conduit 59.

A hollow preform 60 is produced in mold cavity 41 which has a threaded zone 43 for the purpose of providing the threads on the molded preform. The molded preform 60 is ejected from the mold cavity 41 by opening the mold at parting line 49, and stripping the preform 60 from the core rod 47.

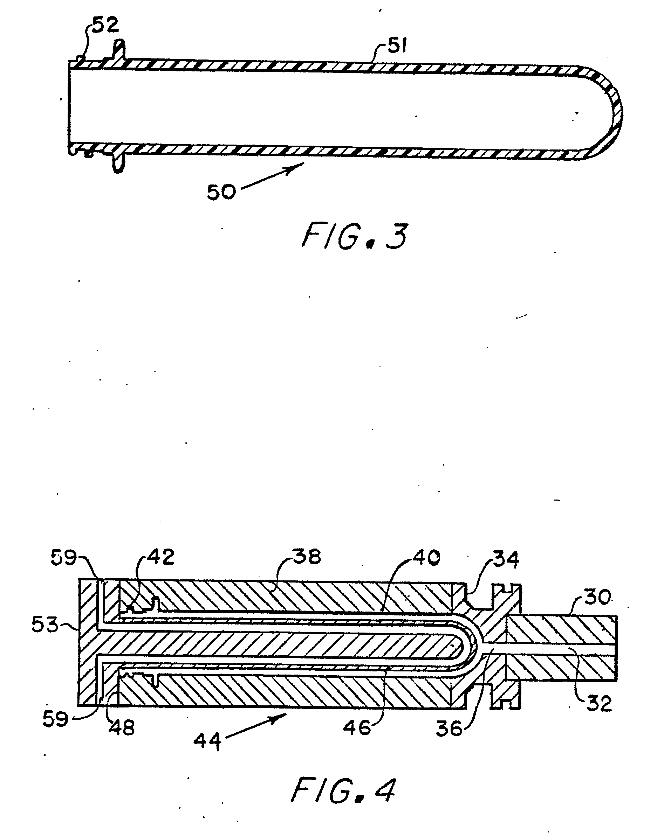

Figure 3 shows a cross sectional view of a plastic injection molded preform 50. The preform has a body portion 51 and a threaded neck portion 52.

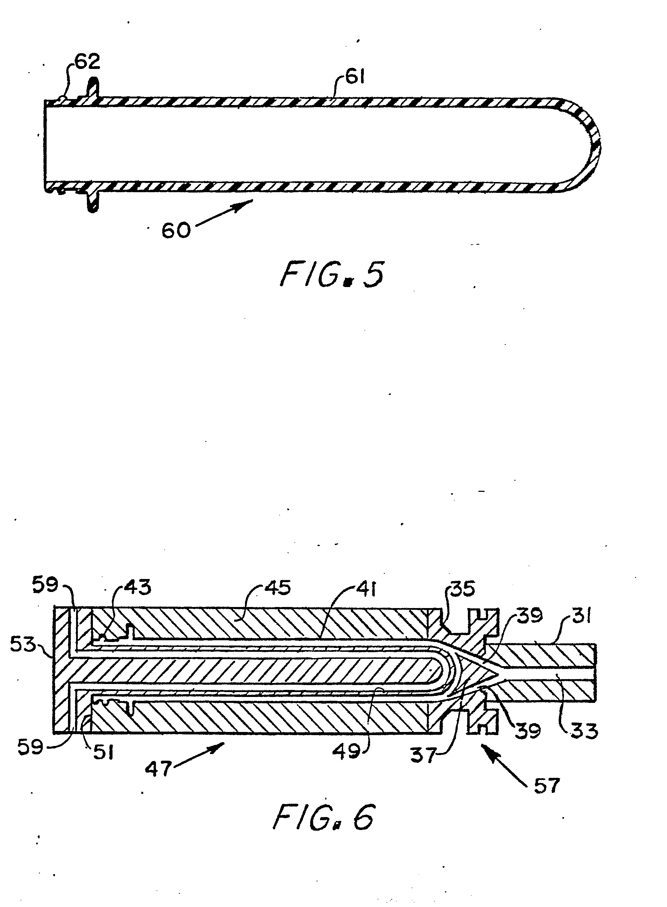

Figure 4 shows a cross sectional view of an injection preform mold 44. The mold has a body portion 38 which has a hollow portion 40 which corresponds to a molded preform 50 such as that shown in Figure 3. The mold has a central core rod 46 and a neck portion 42. The gate section of this mold comprises nozzle 30 having orifice 32, and end cap 34 having orifice 36. Core rod 46 is attached to a backing plate 53 at one end. The backing plate utilizes a cooling medium for controlling the temperature in the preform via conduit 59.

Figure 5 depicts a cross-sectional view of a plastic injection molded preform 60 having a body portion 61 and a threaded neck portion 62.

Figure 6 shows an injection preform mold 47 used for making a preform such as shown in Figure 5. The mold 47 has a body portion 45, a hollow portion 41, a core rod 49 and a neck 43. The gate section 57 of mold 47 comprises a nozzle 31 with orifice 33 which opens out to gate area orifices 39 formed by mandrel "diverter" cone 37 and end cap 35. Core rod 49 is attached to backing plate 53 at one end. The backing plate 53 utilizes a cooling medium for conditioning the preform through conduit 59.

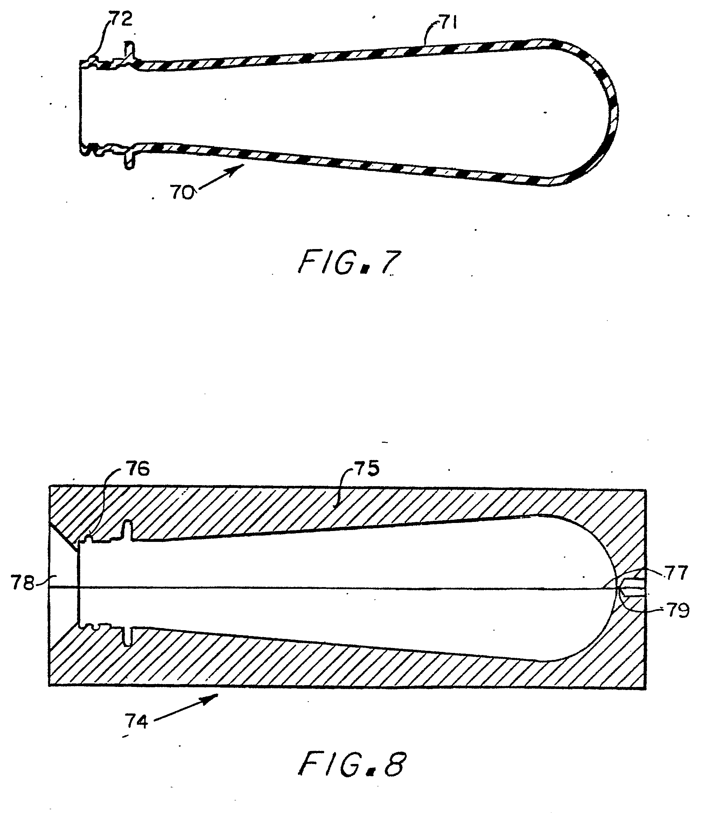

Figure 7 shows a cross-sectional view of an extrusion blow molded preform 70, which has a body portion 71 and a neck portion 72.

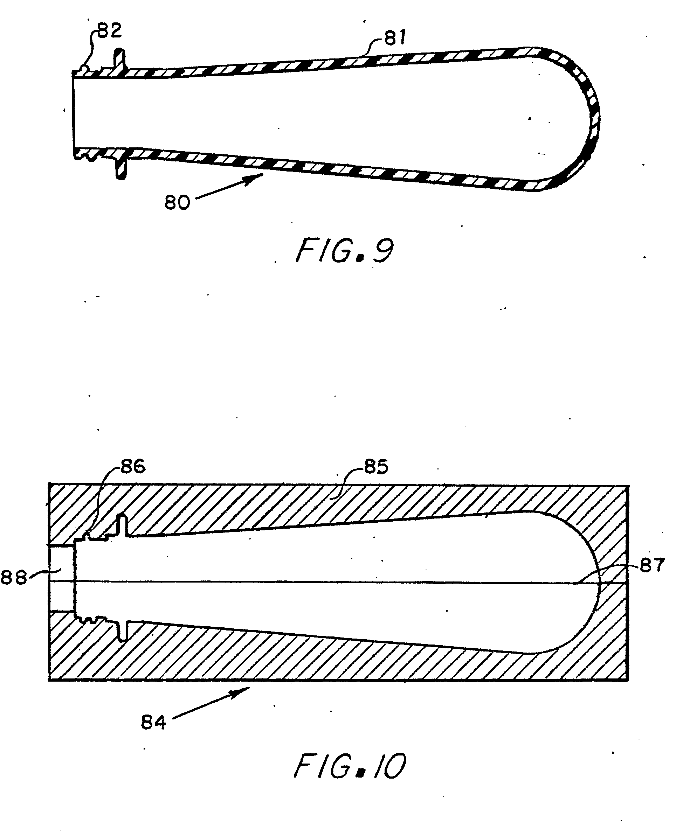

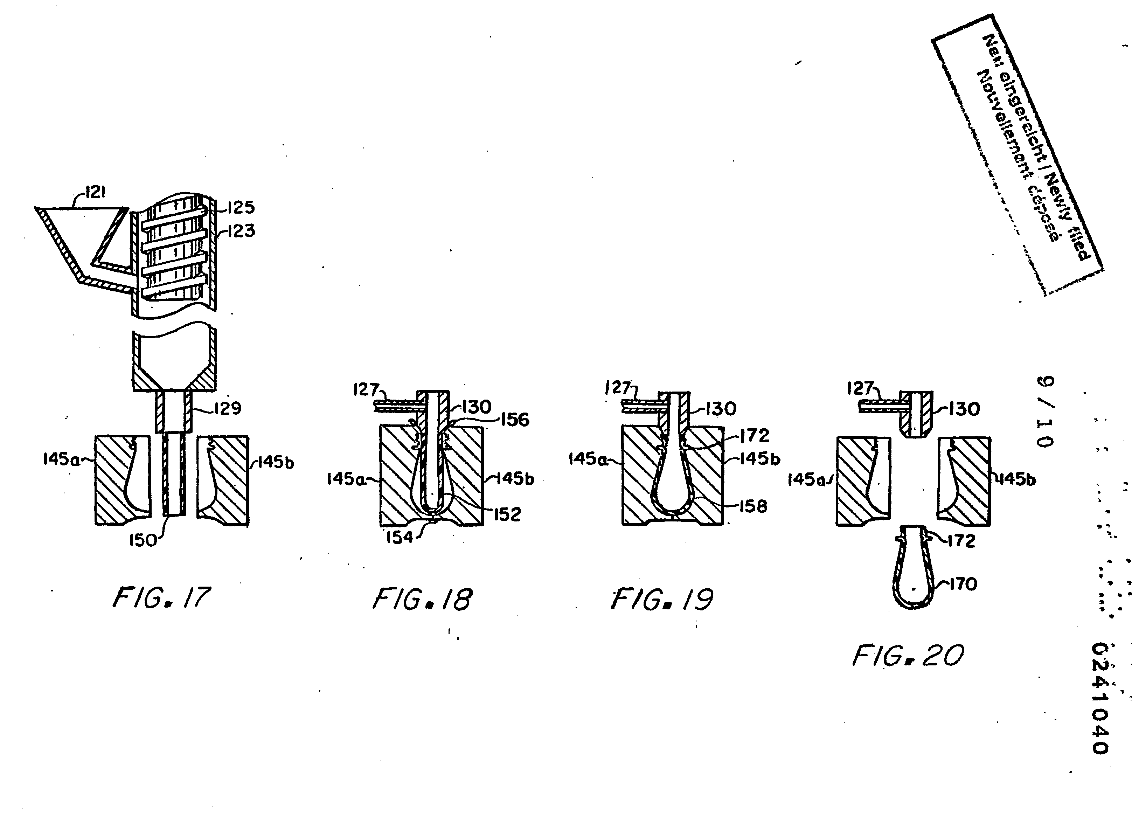

Figure 8 shows an extrusion blown preform mold 74 which has a body portion 75 and a neck portion 76. The mold 74 is capable of opening lengthwise along parting line 77. One end of mold 74 has an opening 78 which receives the blow pin as shown in Figure 19. The edges 79 are sharp enough to cut off excess plastics pinched when the mold is closed.

Figure 9 shows a cross-sectional view of an injection blow molded plastic preform 80 having a body portion 81 and a neck portion 82.

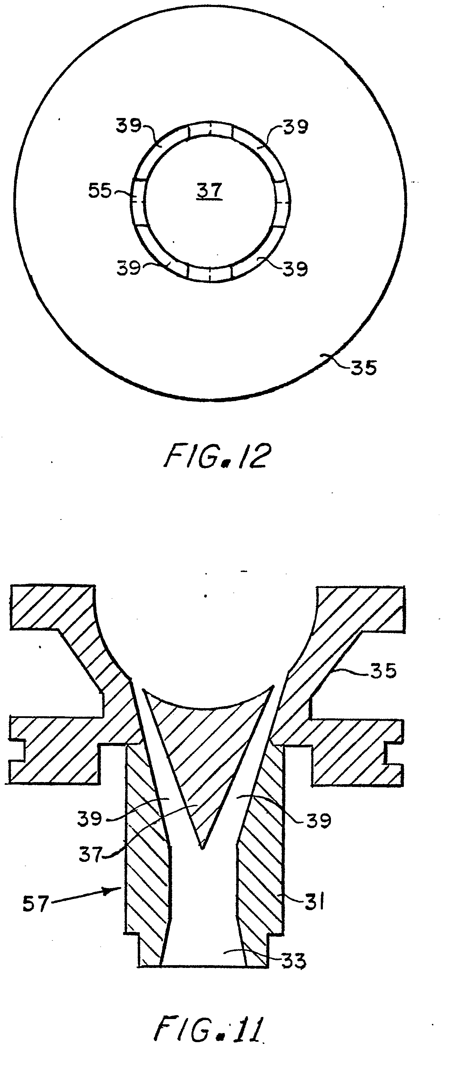

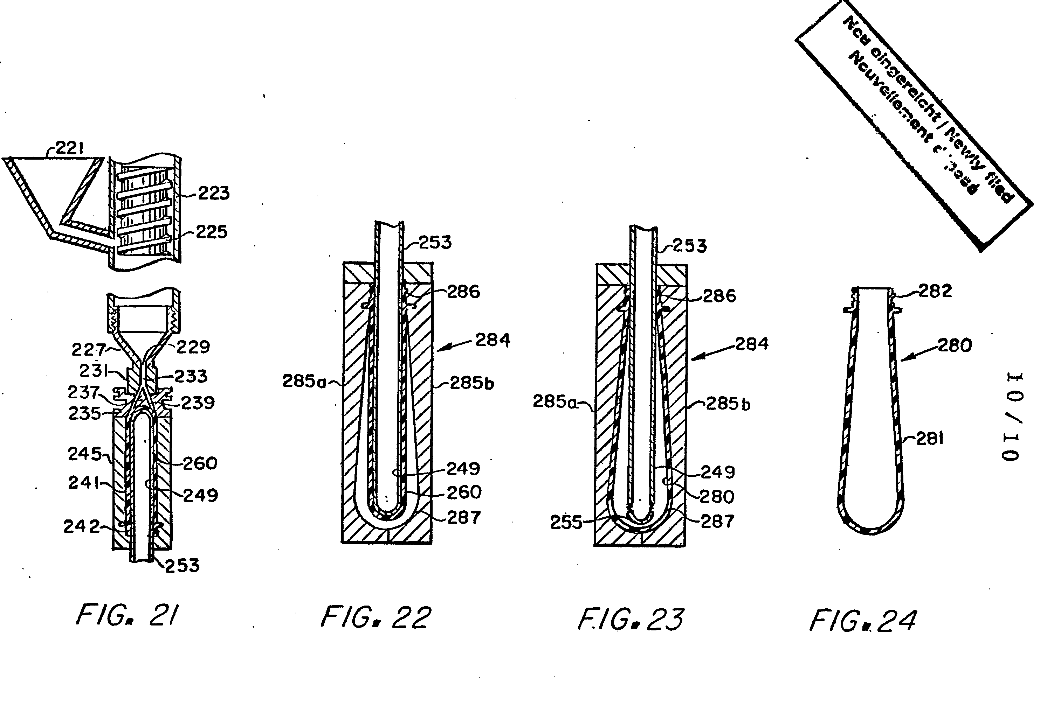

Figure 10 shows an injection blown preform mold 84 which has a body portion 85 and a neck portion 86. The mold 84 is capable of being opened lengthwise along parting line 87. One end of mold 84 has an opening 88 to receive a core rod and preform as shown in Figure 22.

Figure 11 is a cross-sectional view of the gate members shown in Figure 6. The gate 57 comprises a nozzle 31 with orifice 33 which opens out to gate area orifices 39 formed by mandrel "diverter" cone 37 and end cap 35.

Figure 12 is a top view looking down on the gate section 57. Depicted in Figure 12 are the end cap 35 and the mandrel "diverter" cone 37 between which are formed the gate area orifices 39. The mandrel "diverter" cone 37 is held in place by four supports 55 which are merely spacers so that the mandrel "diverter" cone 37 maintains its proper position relative to the gate area orifices 39. While four supports are shown, fewer than or more than four can be used. In operation, the molten plastic proceeds through orifice 33 and divides in gate area orifices 39 before entering the preform mold. This type of gate is referred to as an annular gate or tubular gate, because except for the four supports 55, the runner system provided by gate area orifices 39 would form an annular or tubular shape.

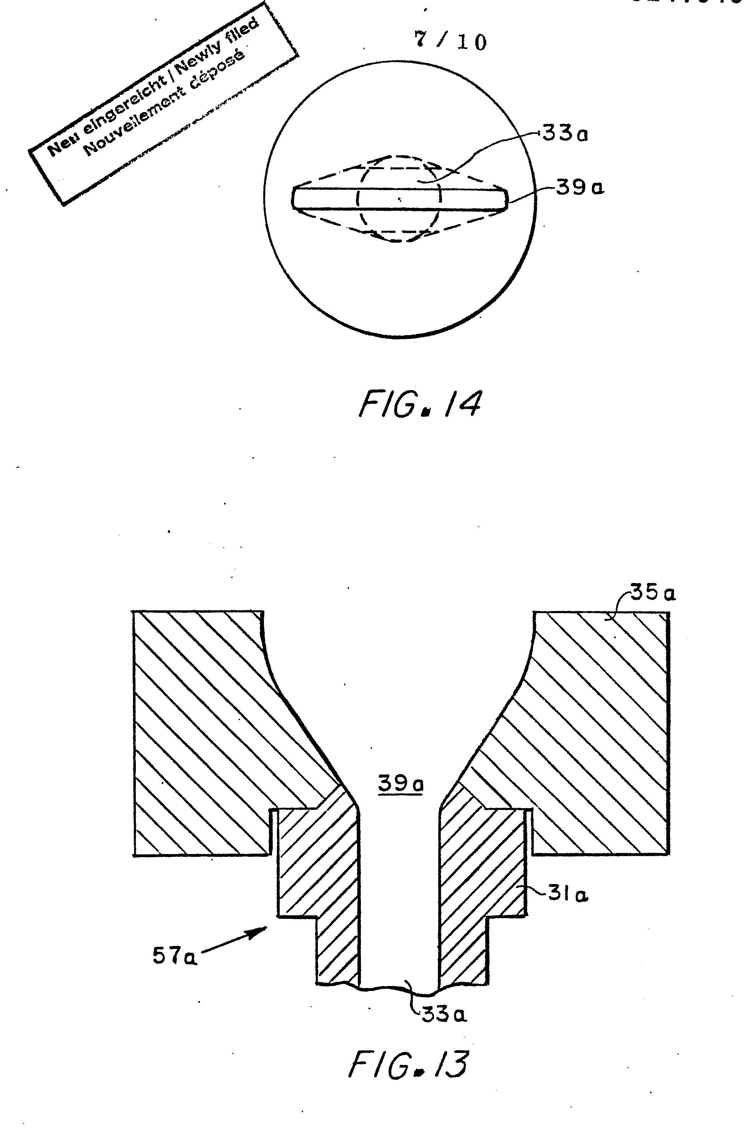

Figure 13 depicts a gate section 57a which is comprised of a nozzle 31a with orifice 33a which opens out to gate orifice 39a. In operation, the molten plastic proceeds from the injection machine through gate area orifice 33a out in orifice 39a before entering the preform mold. This type of gate is referred to as a slotted gate or fangate.

Figure 14 depicts a top view of the gate shown in Figure 13. Below the plane of the paper can be seen the orifice 33a which tapers out to the rectangular shape "slotted" gate area orifice 39a.

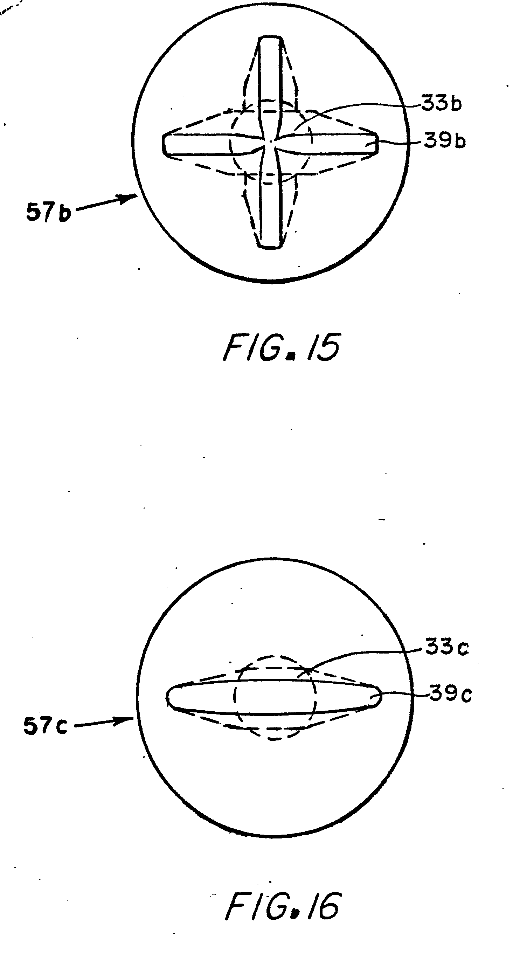

Figure 15 depicts the top view of a cross-shaped gate. In the background can be seen the orifice 33b through which molten plastic proceeds from the injection molding machine. The construction of this gate 57b permits the molten plastic to form into the cross-shaped orifice 39b for proceeding into the preform mold.

Figure 16 shows a top view of an oval or elliptical gate 57c. Shown in the background is orifice 33c through which the molten plastic moves from the injection molding machine and expands in orifice 39c into an oval or elliptical pattern before entering the preform mold.

Figures 17 to 20 depict the apparatus and process for producing extrusion blown preforms by the extrusion-blow molding process.

In Figure 17, PVC compound is introduced into feed hopper 121 and then into a heated barrel 123 of an extruder equipped with screw 125. Semi-molten PVC compound passes through die 129 and is extruded in the form of a molten hollow tube 150. In the open position are mold parts 145a and 145b.

In Figure 18, the mold parts 145a and 145b are moved together in the closed position which pinches off and seals the bottom end of the parison 152. The pinched end of the parison 152 appears as a tail 154 which is subsequently removed. A flash or moil 156 is squeezed out between the top of the mold parts 145a and 145b and the blow pin 130. The flash 156 is subsequently removed.

In Figure 19, air is blown through conduit 127 and through the blow pin 130 to the inside of the plastic preform 158 which expands to the shape of the mold parts 145a and 145b and forms the threads 172 on the preform 158. A cooling medium can be injected through conduit 127 in accordance with the invention.

In Figure 20, the mold parts 145a and 145b are separated and the extrusion blow molded preform 170 is ejected from the mold.

Figures 21 to 24 depict the apparatus and various steps in the injection blow molding process for producing injection blown preforms.

In Figure 21, PVC compound is fed into feed hopper 221 and then into a heated injection barrel 223 provided with screw 225. An amount of semi-molten PVC compound is fed by screw 225, which may act as a ram, through nozzle member 227 and orifice 229 into nozzle 231. The molten PVC passes through nozzle 231 via orifice 233 and continues through end cap 235 via gate area orifices 239 into the mold cavity 241 formed by the core rod 249 and the mold body 245. The core rod 249 is closed at the end of the mold in which the molten PVC is injected. The other end 253 of the core rod 249 is attached to a backing plate which can utilize a cooling medium. A hollow preform 260 is produced in mold cavity 242 which has a threaded zone 243 for the purpose of providing the threads on molded preform. When the preform is cool, the mold body 245 is opened longitudinally and removed from the preform 260 which is left in position on the core rod 249.

In Figure 22, the core rod 249 and plastic preform 260 are enclosed in the two-halves 285a and 285b of injection blow preform mold 284 so that the enclosed end of the core rod 249 extends into the mold cavity 287. The core rod 249 protrudes from the end of the mold as 253 and is connected to a backing plate which can contain a cooling medium in accordance with the invention.

In Figure 23, a gas, such as air, is injected in through the end 253 of core rod 249. The end 255 of the core rod 249 is capable of opening around the circumference of the core rod 249 to allow the gas in the core rod 249 to escape into the plastic preform 280 situated on the core rod 249. The preform 280 expands to the shape of cavity 287 of the mold 284. Alternatively, the core rod 249 can open at other places along the length of the core rod 249, to permit the gas to expand the preform 280 to the shape of cavity 287. When blow molding of preform 280 is completed, the mold halves 285a and 285b are opened and the injection blow molded

preform <u>280</u> is stripped from the core rod <u>249</u> and is depicted in Figure 24.

The extrusion blow molded preform <u>170</u> and the injection blow molded preform <u>280</u> can be stored or used immediately by insertion into a standard reheat and blow (RHB) machine such as manufactured by the Cincinnati-Milacron Company as described in a paper entitled "Reheat Blow Molding of PET Bottles" and presented by R. L. Miller, at the 1980 ANTEC held in New York, New York, May 5-8, 1980, pages 540-542, the disclosure of which is incorporated herein by reference.

In the drawings, the preforms were generally provided with threads. It is understood that bottles without threads or with a single ridge to engage a bottle cap, are also contemplated in the scope of the invention.

## EXAMPLES

The following examples are intended to illustrate the invention, but not to limit it. Unless used otherwise in this specification and claims, temperatures are in degrees Centigrade and parts and percentages are by weight.

## EXAMPLE 1 - CONTROL

Thick wall preforms were formed by extrusion blow molding PVC compound. The resulting preforms were allowed to cool at ambient temperature upon removal from the mold. The molded preforms were reheated and then subjected to stretch blow molding conditions in a Cincinnati-Milacron reheat blow molding machine. However, it was not possible to expand the preforms to fill out the mold.

EXAMPLE 2

A Bekum 121 blow molder was used to mold thick wall PVC preforms. The blow molder was equipped with an atomizer attached directly into the air blowing system. The thick-walled preforms were blow molded with a mixture of air, water and alcohol. The alcohol was used to assist the water in atomizing into the blowing air. Several testing cycles were performed using this air, water and alcohol mixture. The time required to cool thick wall preforms was significantly reduced.

The resulting preforms were reheated and stretch blow molded on a Cincinnati-Milacron reheat and blow molding machine. It was then possible to stretch blow the thick wall preforms into useful containers. It was concluded that the accelerated cooling step prevented the thick wall preforms from annealing. It was possible to produce high quality bottles with consistent dimensions.

EXAMPLE 3

PVC thick wall preforms were produced in a Bekum 121 blow molder. Immediately upon removal of the PVC preforms from the mold, they were immersed in cold water, temperature set at about 10°C.

The resulting PVC preforms were successfully reheated and stretch blown in a Cincinnati-Milacron RHB molding machine.

## EXAMPLE 4

PVC thick wall preforms were produced in a Bekum 121 blow molder. While the PVC preforms were in the mold, they were sprayed on the inside surface with cold $CO_2$ gas. The annealing effect usually encountered with air cooling was eliminated. The preforms could be successfully blown on a Cincinnati-Milacron RHB machine.

WE CLAIM:

- 1 -

A process for producing a plastic preform for use in stretch blow molding plastic hollow parts, which comprises forming the plastic preform and blowing the preform to expand the preform to a size smaller than said plastic parts, and cooling the preform to ambient temperature.

- 2 - The process of Claim 1 wherein said preform is formed by extrusion molding.

- 3 -

The process of Claim 1 wherein said preform is formed by injection molding.

- 4 - The process of Claim 1 wherein said preform is cooled under controlled conditions after blowing said preform.

- 5 - The process of Claim 4 wherein the cooling step is accomplished by contacting the inside and/or outside of the preform with a cooling medium.

- 6 -

The process of Claim 4 wherein the preform is cooled by immersing the preform in a cooling medium.

- 7 - The process of Claim 4 wherein the preform is cooled by contacting the inside and/or the outside of the preform with

(1) a liquid,

(2) a liquefied gas,

(3) a gas,

(4) a metal surface, or

(5) combinations thereof.

- 8 - The process of Claim 3 wherein the injection molding step is conducted in a mold having a gate which reduces the shear rate on the molten plastic.

- 9 - The process of Claim 8 wherein the gate is annular, slotted, cross-shaped or oval in shape.

- 10 -

A process for producing a PVC preform for use in stretch blow molding PVC bottles, which comprises

  (1) extruding a hollow tube of semi-molten PVC compound,

  (2) enclosing said hollow tube within a mold cavity that is shaped with a gradually expanding diameter in the direction away from the bottle neck or opening,

  (3) injecting a gas within the preform to expand the plastic to fill out the mold cavity, and

  (4) ejecting the molded preform from the mold.

- 11 - The process of Claim 10 wherein the preform is cooled under controlled conditions while expanding said preform in step (3).

- 12 - A process for producing a PVC preform for use in stretch blow molding PVC hollow parts, which comprises injecting molten PVC into a mold, and cooling the resulting preform to ambient temperature.

- 13 - The process of Claim 12 wherein the injection molding step is conducted in a mold having a gate which reduces shear on the molten PVC.

- 14 -

The process of Claim 13 wherein the gate is annular, slotted, cross-shaped or oval in shape.

- 15 - A process for producing a PVC preform for use in stretch blow molding PVC bottles, which comprises

(1) injecting molten PVC into a first mold cavity to produce a hollow preform of uniform diameter throughout the length of the preform,

(2) removing the first mold from the molded preform,

(3) enclosing the molded preform within a second mold cavity that is shaped with a gradually expanding diameter in the direction away from the bottle neck or opening,

(4) injecting a gas within the preform to expand the plastic to fill out the mold cavity, and

(5) ejecting the molded preform from the mold.

- 16 - The process of Claim 15 wherein the preform is cooled under controlled conditions while expanding the preform in step (4).

- 17 - The process of Claim 15 wherein the injection molding step (1) is conducted in a mold having a gate which reduces the shear rate on the molten PVC.

- 18 -

The process of Claim 17 wherein the gate is annular, slotted, cross-shaped or oval in shape.

- 19 - In a two-stage process for stretch-blow molding plastic hollow parts which comprises

(1)   producing a preform and thereafter

(2)   heating and blowing said preform to produce said plastic parts,

the improvement comprising blowing the preform in step (1) to expand said preform.

- 20 - The process of Claim 19 wherein said preform is produced by extrusion molding.

- 21 - The process of Claim 19 wherein said preform is produced by injection molding.

- 22 - The process of Claim 19 wherein said preform is cooled under controlled conditions after blowing said preform.

- 23 -

The process of Claim 22 wherein the cooling step is accomplished by contacting the inside and/or outside of the preform with a cooling medium.

- 24 - The process of Claim 22 wherein the preform is cooled by immersing the preform in a cooling medium.

- 25 - The process of Claim 22 wherein the preform is cooled by contacting the insides and/or the outside of the preform with

    (1)  a liquid,

    (2)  a liquefied gas,

    (3)  a gas,

    (4)  a metal surface, or

    (5)  combinations thereof.

- 26 - The process of Claim 25 wherein the injection molding step is conducted in a mold having a gate which reduces shear on the molten plastic.

- 27 - The process of Claim 26 wherein the gate is annular, slotted, cross-shaped or oval in shape.

- 28 -

A two-stage process for stretch-blow molding PVC hollow parts which comprises:

(1) injection molding a PVC preform, and

(2) heating and blowing said preform to produce said PVC parts.

- 29 - The process of Claim 28 wherein the injection molding step is conducted in a mold having a gate which reduces shear on the molten PVC.

- 30 - The process of Claim 29 wherein the gate is annular, slotted, cross-shaped or oval in shape.

- 31 - In a two-stage process for stretch blow-molding plastic hollow parts which comprises

(1) producing a preform and thereafter

(2) heating and blowing said preform to produce said plastic parts,

the improvement comprising cooling said preform under controlled conditions.

- 32 -

The process of Claim 31 wherein the cooling step is accomplished by contacting the inside and/or the outside of the preform with a cooling medium.

- 33 - The process of Claim 32 wherein the preform is cooled by immersing the preform in a cooling medium.

- 34 - The process of Claim 32 wherein the preform is cooled by contacting the inside and/or the outside of the preform with a liquid.

- 35 - The process of Claim 32 wherein the preformed is cooled by contacting the inside and/or outside of the preform with a liquefied gas.

- 36 - The process of Claim 32 wherein the preform is cooled by contacting the inside and/or outside of the preform with a gas.

- 37 - The process of Claim 32 wherein the preform is cooled by contacting the inside and/or outside of the preform with a mixture of liquid and gas.

- 38 -

In a mold used for the injection molding of a molten polymer to form a plastic preform in the manufacture of plastic hollow parts,

said mold comprising a body portion and a gate, the improvement comprising a gate which reduces the shear rate on the molten polymer.

- 39 - The mold of Claim 38 wherein said gate is annular, slotted, cross-shaped or oval in shape.

- 40 - The mold of Claim 39 wherein the polymer is PVC compound.

FIG. 1

FIG. 2

FIG. 3

FIG. 4

**FIG. 5**

**FIG. 6**

72    71

70

FIG.7

76    75

78    77

79

74

FIG.8

**FIG.9**

**FIG.10**

FIG. 12

FIG. 11

33a

39a

**FIG. 14**

35a

39a

31a

57a

33a

**FIG. 13**

0241040

FIG. 15

FIG. 16

FIG. 17

FIG. 18

FIG. 19

FIG. 20

9 / 10

0241040

FIG. 21

FIG. 22

FIG. 23

FIG. 24

**European Patent Office**

## EUROPEAN SEARCH REPORT

. Application number

| DOCUMENTS CONSIDERED TO BE RELEVANT | | | EP 87105320.3 |
|---|---|---|---|

| Category | Citation of document with indication, where appropriate, of relevant passages | Relevant to claim | CLASSIFICATION OF THE APPLICATION (Int. Cl 4) |
|---|---|---|---|
| X | US - A - 4 122 141 (KRALL) <br> * Column 8, lines 62-67 * | 1,2,10, 11,19, 20,40 | B 29 C 49/02 |
| Y | | 21,22 | |
| | -- | | |
| X | US - A - 4 473 515 (RYDER) <br> * Column 6, lines 6-59 * | 1,3,4, 12,28 | |
| Y | | 13,14, 17,18, 29 | |
| A | | 5,7,15, 16,30 | |
| | -- | | |
| X | US - A - 3 387 324 (VALYI) <br> * Fig. * | 1,4,8 | |
| Y | | 13,14, 17,18, 21,22, 26,29 | TECHNICAL FIELDS SEARCHED (Int. Cl 4) |
| A | | 9,27,30 | B 29 B <br> B 29 C |
| | -- | | |
| X | US - A - 4 091 059 (RYDER) <br> * Column 2, lines 17-41 * | 1,4,5, 7,19, 22,23, 25,31, 32,35- 37 | |
| Y | . | 26 | |
| | -- | | |
| X | US - A - 4 063 867 (JANNIERE) <br> * Column 5, lines 57-66; fig. 11-15,23,24 * | 1,15, 19,31 | |
| | -- | | |

The present search report has been drawn up for all claims

| Place of search | Date of completion of the search | Examiner |
|---|---|---|
| VIENNA | 21-07-1987 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&: member of the same patent family, corresponding document

EPO Form 1503 03 82

| DOCUMENTS CONSIDERED TO BE RELEVANT | | | EP 87105320.3 |
|---|---|---|---|
| Category | Citation of document with indication, where appropriate, of relevant passages | Relevant to claim | CLASSIFICATION OF THE APPLICATION (Int. Cl 4) |
| X | US - A - 4 206 171 (UHLIG) <br> * Column 7, lines 66-68; column 8, lines 1-36 * <br> -- | 31-34 | |
| Y | US - A - 4 449 913 (KRISHNAKUMAR) <br> * Fig. 6 * <br> -- | 31-34 | |
| Y | US - A - 3 937 610 (FARRELL) <br> * Fig. 2 * <br> -- | 31-34 | |
| X | US - A - 3 978 184 (DYBALA) <br> * Claims * <br> -- | 1 | |
| A | US - A - 4 192 843 (TRIESCHOCK) <br> * Totality * <br> -- | 31,32, 37 | TECHNICAL FIELDS SEARCHED (Int. Cl.4) |
| A | US - A - 4 233 022 (BRADY) <br> * Column 4, lines 5-16 * <br> ---- | 1,3 | |

The present search report has been drawn up for all claims

| Place of search | Date of completion of the search | Examiner |
|---|---|---|
| VIENNA | 21-07-1987 | REININGER |